# EUROPEAN PATENT APPLICATION

(11) **EP 2 388 165 A1**
(43) Date of publication of application: **23.11.2011**
(21) Application number: 09833223.2
(22) Date of filing: 17.12.2009
(51) Int. Cl.: B60R 11/02, H04N 5/64

(54) **MEDIA PLAYBACK/DISPLAY DEVICE**

(30) Priority: 18.12.2008 JP 2008322161; 04.08.2009 JP 2009181418
(71) Applicant: Panasonic Corporation, Kadoma-shi Osaka 571-8501 (JP)
(72) Inventor: YAMAGATA, Tetsuji, Osaka-shi, Osaka 540-6207 (JP); KATTA, Noboru, Osaka-shi, Osaka 540-6207 (JP); INOBE, Yutaka, Osaka-shi, Osaka 540-6207 (JP); TSURUTA, Yoichiro, Osaka-shi, Osaka 540-6207 (JP)
(74) Representative: Grünecker, Kinkeldey, Stockmair & Schwanhäusser
(86) International application number: PCT/JP2009/006988
(87) International publication number: WO 2010/070916

(57) **Abstract**

Provided is a method playback/display device where a user can load/unload a medium and perform operation from a vehicle front seat easily. The device (10) is mounted in a vehicle and includes: a media playback unit (20) which plays information stored in a medium; and a display unit (30) which displays video information played by the media playback unit (20). A media loading slot (22a) for loading a medium (11) into the media playback unit (20) is arranged toward the vehicle front seat. The display unit (30) has a display screen arranged so that the display screen can be viewed from the vehicle rear seat.

## Description

### Technical Field

The present invention relates to an apparatus that includes a media playback unit and a display unit which are integrated with each other for playback and display of audio or video information recorded in a medium, and a media playback and display apparatus that is mounted in a car.

### Background Art

Conventionally, a media playback and display apparatus that is mounted in the ceiling in a vehicle such as a car, and that allows insertion, ejection and operation of a medium easily from each seat is known (see, for example, Patent Literature 1).

With such a conventional media playback apparatus (hereinafter "conventional apparatus"), the media playback unit and display unit are generally supported by a rotation support mechanism to be rotatable about the axis of rotation in the Z direction (for example, in the vertical direction). Thus, the conventional apparatus makes it possible to orient the media playback unit and the display unit toward the front of passengers sitting in a left or right rear seat of a vehicle by operating an operator. Further, this allows even passengers sitting in rear seats to easily insert and eject a medium to and from the conventional apparatus, or operate the conventional apparatus using a remote controller or hardware keys mounted in the medium playback and display apparatus.

### Citation List

### Patent Literature

Patent Literature 1: Japanese Patent Application Laid-Open No.2006-205977

### Disclosure of Invention

### Problems to be Solved by the Invention

However, there is a problem that operations of the conventional apparatus are complicated. The reason is as follows. The media playback and display apparatus is generally mounted in a high position in the vehicle as described above. Therefore, when only children are sitting in rear seats inside the vehicle, it is difficult to insert, eject or operate a medium using a remote controller or hardware keys mounted in the media playback and display apparatus. Hence, in such a case, a passenger in a front seat needs to operate a medium for passengers in rear seats. Then, in order to orient the media inserting slot toward the front seats every time a medium is operated, the passengers need to rotate the media playback and display apparatus.

An object of the present invention is to provide a media playback and display apparatus that allows passengers in front seats of a vehicle to easily insert, eject or operate a medium.

### Means for Solving the Problem

The media playback and display apparatus according to the present invention employs a configuration which includes: a media playback unit that is mounted in a vehicle and that plays back information recorded in a medium; and a display unit that displays video information played back by the media playback unit, and in which: a media inserting slot that allows insertion of the medium into the media playback unit is provided to be oriented toward a front seat in the vehicle; and a screen of the display unit is arranged to be viewable from a rear seat of the vehicle.

Note that arranging the screen to be viewable from a rear seat means that the screen is arranged in a state where passengers can see the entirety of content on the screen and understand the display content.

According to this configuration, the media inserting slot is arranged to be oriented toward the front seat in the vehicle and the screen of the display unit is arranged to be oriented toward the rear seat, so that the passenger in the front seat can easily change media.

Note that a front seat means a seat located in the front side of the vehicle (for example, a seat in the row of the driver's seat and front passenger's seat).

Further, the media playback and display apparatus according to the present invention employs a configuration in which: the media inserting slot is provided at one end of the media playback and display apparatus; and the display unit is provided rotatably by being pivotally supported by a rotating shaft provided at the other end of the media playback and display apparatus.

In this configuration, the media inserting slot that is required to change media and the screen that displays video information are arranged in different ends of the media playback and display apparatus, so that it is possible to keep the media playback and display apparatus according to the present invention in the minimum required size and miniaturize the media playback and display apparatus.

Further, the media playback and display apparatus according to the present invention employs a configuration which includes a display unit accommodator that accommodates the display unit, and in which the display unit rotates between a viewing position where the screen can be viewed from the rear seat of the vehicle and an accommodating position where the display unit is accommodated in the display unit accommodator.

In this configuration, when video information is not displayed on the display unit, that is, when the display unit is not used, the media playback and display apparatus according to the present invention enables effective utilization of the space inside a vehicle by accommodating the display unit in the media playback and display apparatus.

Further, the media playback and display apparatus according to the present invention employs a configuration in which the display unit accommodator accommodates the display unit such that the screen of the display unit becomes parallel to a ceiling surface of the vehicle.

In this configuration, when the display unit is unused and accommodated in the media playback and display apparatus, the display unit does not bother the driver checking the rear view of the vehicle, so that the media playback and display apparatus according to the present invention can provide improved safety particularly when driving the vehicle backward.

### Advantageous Effects of Invention

According to the present invention, it is possible to provide a media playback and display apparatus that allows passengers in a front seat in a vehicle to easily insert, eject or operate a medium.

### Brief Description of Drawings

FIG.1 is an overall perspective view showing from one end side a media playback and display apparatus according to Embodiment 1 of the present invention;
FIG.2 is an overall perspective view showing from the other end side the media playback and display apparatus according to Embodiment 1;
FIG.3 shows six sides of a media playback and display apparatus according to Embodiment 1;
FIG.4 is a bottom view and a cross-sectional view upon use of a media playback and display apparatus according to Embodiment 1;
FIG.5 is an overall perspective view showing from one end side a media playback and display apparatus mounted in a vehicle according to Embodiment 1;
FIG.6 is an overall perspective view showing from the other end side a media playback and display apparatus mounted in a vehicle according to Embodiment 1;
FIG.7 is a perspective view showing from above a media playback and display apparatus according to Embodiment 2 of the present invention;
FIG.8 is a front view showing a media playback and display apparatus with a shutter open according to Embodiment 2, from the direction facing a media inserting slot;
FIG.9 is a front view showing a media playback and display apparatus with a shutter closed according to Embodiment 2, from the direction facing a media inserting slot;
FIG.10 is a front view and a cross-sectional view showing a media playback and display apparatus with a display unit accommodated in an accommodator according to Embodiment 2;
FIG.11 is a view partially enlarging area B in FIG.10 according to Embodiment 2;
FIG.12 is a perspective view showing from above a media playback and display apparatus according to Embodiment 3 of the present invention; and
FIG.13 is a perspective view showing from above a media playback and display apparatus according to Embodiment 3.

### Best Mode for Carrying Out the Invention

Hereinafter, embodiments of the present invention will be explained.

### (Embodiment 1)

The media playback and display apparatus according to Embodiment 1 of the present invention will be explained with reference to the accompanying drawings.

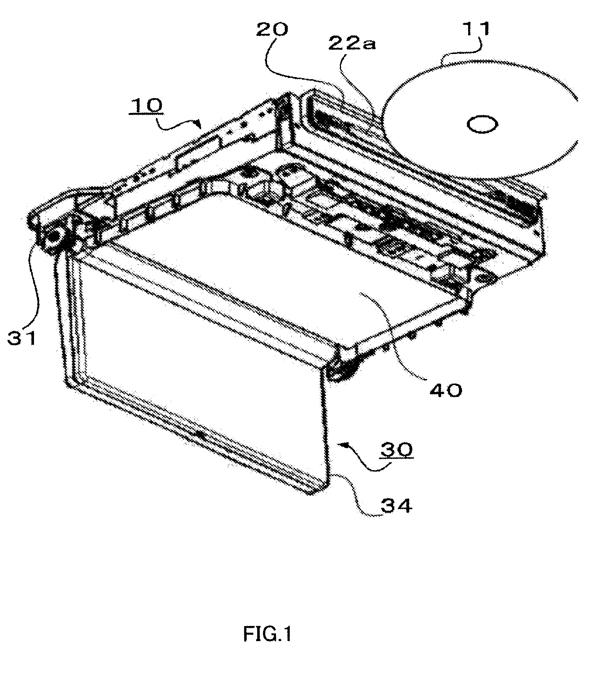

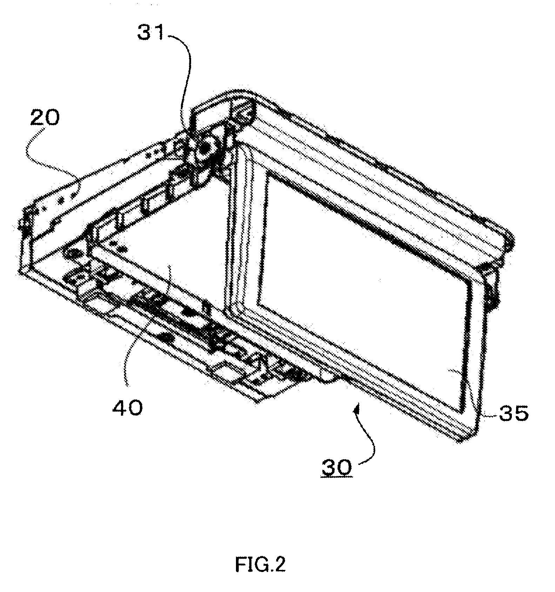

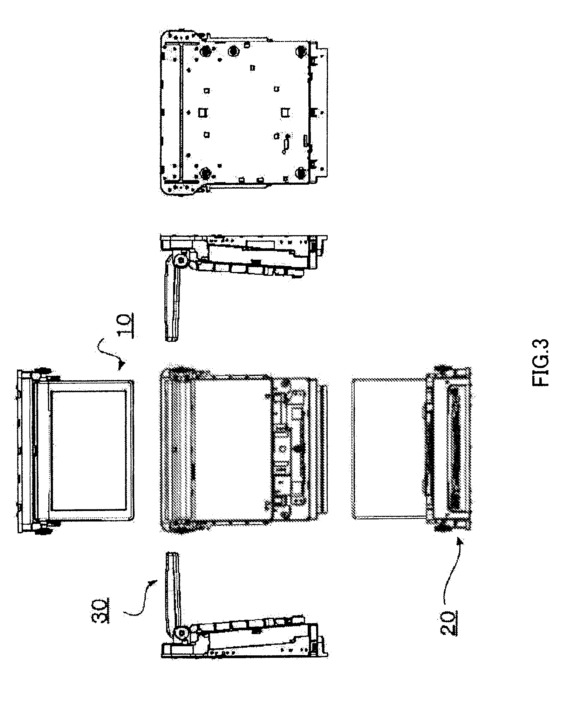

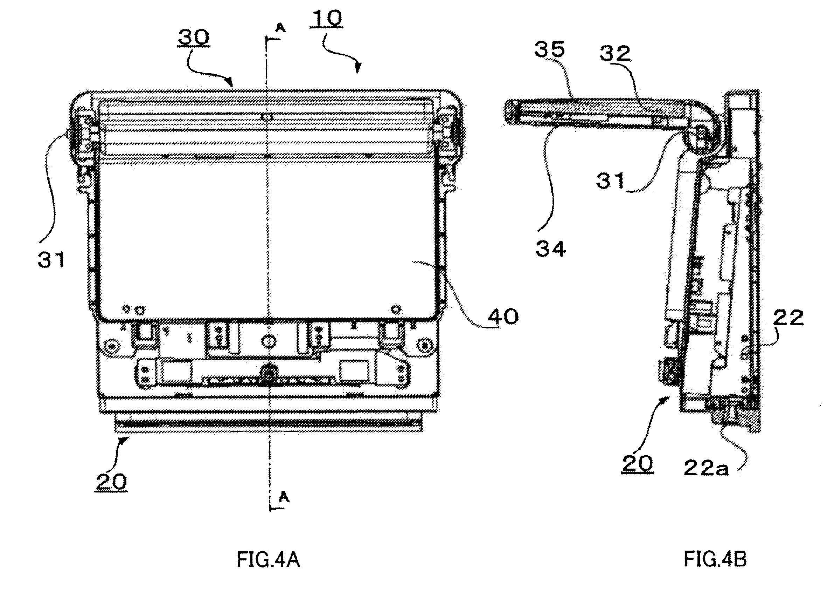

FIG. 1 and FIG.2 are overall perspective views of a media playback and display apparatus according to the present embodiment, and show the apparatus from one end and the other end of the apparatus. FIG.3 shows the six sides of the media playback and display apparatus according to Embodiment 1. FIG.4 is a bottom view and a cross-sectional view showing the media playback and display apparatus according to Embodiment 1. FIG.4A is a bottom view when the media playback and display apparatus according to the present embodiment is used. FIG.4B is a cross-sectional view showing part A-A in FIG.4A.

The media playback and display apparatus 10 according to Embodiment 1 is an apparatus that includes a media playback unit 20 and a display unit 30 integrated with each other. The media playback unit 20 is arranged inside the media playback and display apparatus 10, and plays back information recorded in the medium 11. The display unit 30 displays video information played back in the media playback unit 20.

Assume that the media playback unit 20 is a DVD playback unit for inserting and playing back DVDs (Digital Versatile Discs) of optical discs one by one as the medium 11. Note that the media playback unit 20 may be other than a DVD playback unit. For example, the media playback unit 20 may be a CD (Compact Disc) playback unit, an MD (Mini Disc) playback unit, a BD (Blu-ray Disc) playback unit, a media playback unit for playing back information recorded in an SD memory card or a memory stick, an HDD (Hard Disk Drive) and so on. Further, for the media playback unit 20, it is equally possible to use a multi-player apparatus for inserting a plurality of media 11, and selecting between and playing back the medium 11 inside the apparatus.

The media playback unit 20 is equipped with a media playback device 22 in which mechatronic components (not shown) for playing back optical discs of the medium 11 such as an optical pickup and turn table are built. Further, the media playback unit 20 has a media inserting slot 22a for inserting and ejecting the medium 11.

Further, the media playback unit 20 includes a media playback controlling section in which, for example, electronic components for controlling the media playback device 22 electrically are mounted. In the media playback controlling section, for example, electronic components for performing overall electronic control of the media playback and display apparatus 10 are mounted. The media playback controlling section is provided with a control substrate (hereinafter "main substrate") for controlling the media playback device 22 and the display unit 30.

The display unit 30 is attached to the media playback and display apparatus 10 by means of a support axis 31 for supporting the display unit 30 openably. The display unit 30 rotates about the support axis 31 as the rotating shaft, and moves between the viewing position and the accommodation position. Here, the viewing position refers to the position of the display unit 30 when passengers in rear seats view video images displayed on a screen 35 of the display unit 30. Further, the accommodation position refers to the position of the display unit 30 when the display unit 30 is accommodated in a display unit accommodator 40 in case where video images are not displayed on the display unit 30, that is, in case where the display unit 30 is not used.

The display unit 30 is formed with the display device 32 and the display substrate arranged inside, and a case 34 that covers the display device 32 and the display substrate. The display device 32 is a liquid crystal display, an organic EL display, an inorganic EL display, an FED (Field Emission Display), an SED (Surface-conduction Electron-emitter Display), a VFD (Vacuum Fluorescent Display), a plasma display and a cathode ray tube. The display substrate is a substrate having a display device controlling section for electronically controlling the display device 32.

The media playback and display apparatus 10 further has a connection cable (not shown) for electrically connecting the media playback unit 20 and the display unit 30. Electrical signals such as video signals, and control signals are transmitted and received between the media playback unit 20 and the display unit 30 through this connection cable.

The media playback unit 20 has the main substrate, the media playback device 22 and a remote controller light receiving section. The main substrate has the media playback controlling section that controls the media playback device 22 electronically and that communicates with the display substrate of the display unit 30. The media playback controlling section is connected to a signal receiving section such as the remote controller light receiving section that receives signals from an operating means such as a remote controller. Note that the main substrate also has a video outputting section, speech outputting section and video inputting section.

The display unit 30 has the display substrate inside. This display substrate has the display device controlling section, and controls the display device 32.

When the medium 11 is inserted (or when the medium 11 is changed) in the media playback device 22 and a playback operation is performed using a remote controller or hardware keys, video signals outputted from the media playback device 22 are sent to the display device controlling section of the display substrate. Then, the video signals sent to the display device controlling section are converted into signals that can be displayed in the display device 32. As a result, video images are displayed in the display device 32, so that the passengers in the vehicle can view display content on the screen 35 of the display device 32.

Further, speech signals outputted from the media playback device 22 are converted into adequate speech levels in the speech outputting section, and outputted through a connector. The connector of the speech outputting section allows connection of a jack for wired headphones, Consequently, passengers can hear speech that is played back, by using wired headphones.

Alternatively, the speech outputting section may transmit speech signals to wireless headphones or a speaker unit by infrared light or by radio. In this case, the wireless headphones and speaker unit need to have a receiving means that can receive speech signals outputted from the speech outputting section and a converting means that converts the received signals into speech. By this means, passengers can listen to speech outputted from the media playback device 22 wirelessly.

Next, the state will be explained where the media playback and display apparatus 10 configured as described above is mounted in the ceiling 12 in the vehicle.

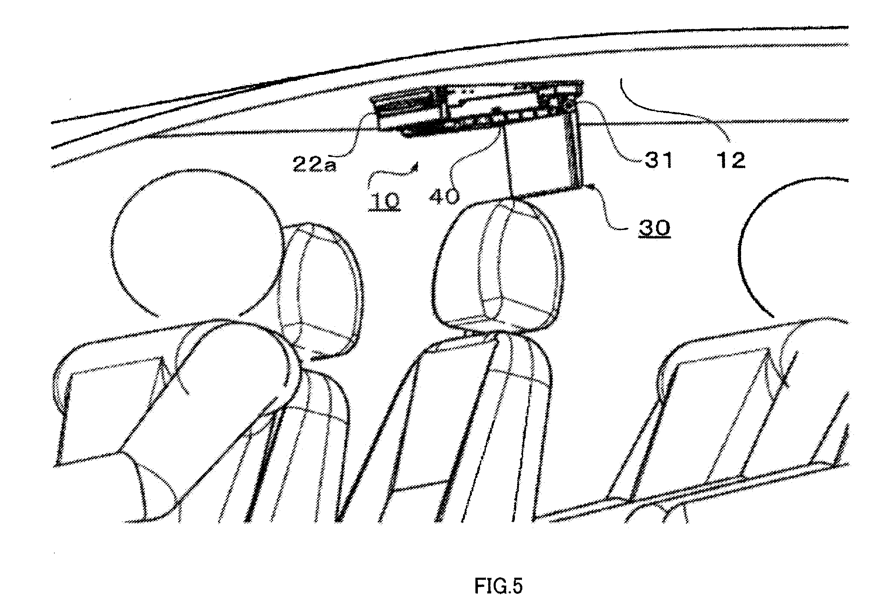

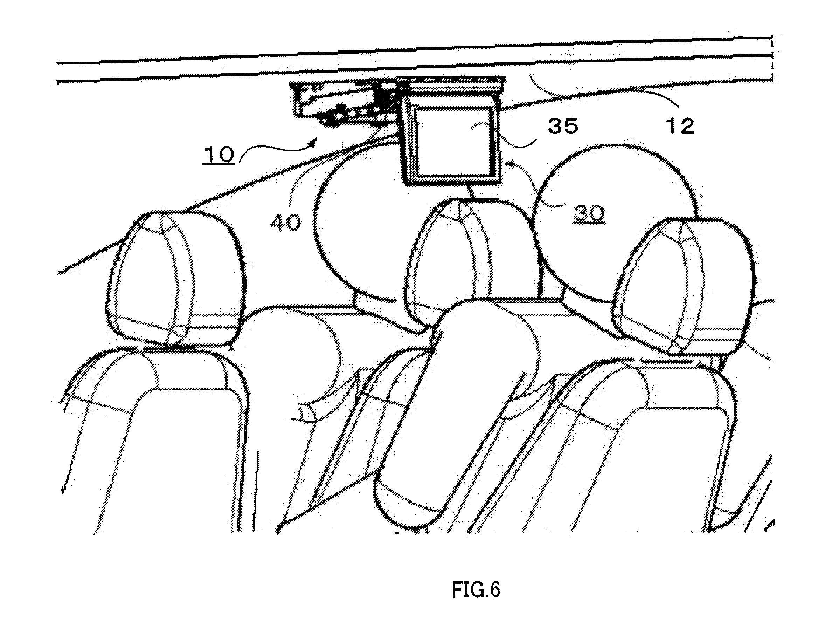

FIG.5 and FIG.6 are perspective views of the media playback and display apparatus 10 mounted in the ceiling 12 of the vehicle according to Embodiment 1. FIG.5 is a view showing the media playback and display apparatus 10 mounted in the ceiling 12 of the vehicle, in a direction from the front to the rear of the vehicle. FIG.6 is a view showing the media playback and display apparatus 10 mounted in the ceiling 12 of the vehicle, in a direction from the rear to the front of the vehicle.

As shown in FIG.5 and FIG.6, the media playback and display apparatus 10 is mounted in the ceiling 12 of the vehicle such that the media inserting slot 22a is arranged to be oriented toward the front seats (that is, the driver's seat and front passenger's seat) of the vehicle. Accordingly, the passengers in the front seats turn back to easily insert or change the medium 11.

Further, in a state where the media playback and display apparatus 10 is mounted in the ceiling 12, the support axis 31 for supporting the display unit 30 openably is arranged on the opposite side of the media inserting slot 22a. Then, the display unit 30 rotates about this support axis 31. When the display unit 30 is not used, the display unit 30 rotates about the support axis 31 and is accommodated such that the ceiling 12 and the screen 35 of the display unit 30 become parallel. Further, when the display unit 30 is used, the display unit 30 rotates about the support axis 31 and adjusts its position such that the screen 35 of the display unit 30 is oriented toward the rear seats. Accordingly, when the display unit 30 is accommodated, the display unit 30 is accommodated in the display unit accommodator 40 in a state where the screen 35 is oriented downward.

As described above, with the media playback and display apparatus 10 according to Embodiment 1, the screen 35 is provided to be oriented toward the rear seats when the display unit 30 that displays video images is used, and the media inserting slot 22a is provided to be oriented toward the front seats.

Next, the operation of the media playback and display apparatus 10 configured as described above will be explained.

Assume that the media playback and display apparatus 10 is mounted in the ceiling 12. When a passenger starts inserting the medium 11 in the media inserting slot 22a of the media playback unit 20, the media playback and display apparatus 10 detects that the medium 11 starts being inserted, in the vicinity of the media inserting slot 22a of the media playback unit 20. Then, the media playback and display apparatus 10 starts rotating a roller (not shown), and performs an operation of pulling the medium 11 into the media playback unit 20 sandwiching the medium 11 by means of this roller and the housing of the media playback unit 20. As a result, the medium 11 is placed in a playback position in the media playback unit 20 (for example, on the above-described turntable).

Then, by performing a playback operation with respect to the media playback and display apparatus 10, passengers can watch images played back by the display device 32. Further, passengers can listen to speech that is played back, by using speech playback apparatuses ( not shown) such as speakers mounted in the vehicle, wireless headphones or wired headphones.

Furthermore, when the passenger performs an operation of pushing an ejection button (not shown) because playback of the medium 11 is finished or because the medium 11 is changed with other optical discs, the media playback and display apparatus 10 transitions to the ejection operation of ejecting the medium 11 from the media playback unit 20. The media playback and display apparatus 10 performs this ejection operation in reverse steps of when a disc is inserted. That is, the media playback and display apparatus 10 ejects the medium 11 from the disc playback position toward the media inserting slot 22a by rotating the above-described roller opposite.

Then, the media playback and display apparatus 10 stops the rotation operation of the roller when the medium 11 is ejected to a certain extent, and maintains the state where the medium 11 is sandwiched between the roller and the media playback unit 20.

Therefore, the ejected medium 11 stays in the media inserting slot 22a without falling, and is pulled out by the passenger. Further, it is possible to close and accommodate the display unit 30 when the passengers do not use this apparatus or when this apparatus blocks the driver's rear view.

A case will be assumed here where only children are sitting in the rear seats as passengers in the vehicle, and children themselves cannot eject the medium 11 or operate keys. Even in this case, the media inserting slot 22a is oriented toward the front seats, so that a grown-up sitting in the front passenger's seat can easily insert and eject the medium 11. Although the driver inserts and ejects the medium 11, or operates the medium 11 while the vehicle is parking or stopping in case where a grown-up is not sitting in the front passenger's seat, even in this case, the media inserting slot 22a is oriented toward the front seats, so that the driver can operate the medium smoothly.

Further, it is possible to check at a glance that the media inserting slot 22a is oriented toward the front seat side, so that it is possible to prevent children in the rear seats from operating the media inserting slot 22a in an irregular way and improve safety while driving.

As described above, the media playback and display apparatus 10 is configured such that the media inserting slot 22a of the media playback unit 20 that plays back the medium 11, is arranged to be oriented toward the front seats of the vehicle and further arrange the screen 35 of the display unit 30 that displays video information, is arranged to be oriented toward the rear seats. Consequently, even in a case where only small children are sitting in rear seats in the vehicle, the media playback and display apparatus 10 allows a grown-up sitting in a front seat to easily change the medium 11 and improve the operability.

### (Embodiment 2)

Hereinafter, the media playback and display apparatus according to Embodiment 2 of the present invention will be explained with reference to the accompanying drawings.

The media playback and display apparatus according to the present embodiment differs from Embodiment 1 in providing a shutter that opens and closes with respect to a media inserting slot of a media playback unit in order to prevent a medium inserted in the media playback and display apparatus from jumping out of the media playback and display apparatus due to some influence. The situation that the medium jumps outside the media playback and display apparatus occurs when the brakes are applied while, for example, the car in which the media playback and display apparatus is mounted is driving.

The configuration of the media playback and display apparatus according to the present embodiment is the same as the media playback and display apparatus according to Embodiment 1 except for the shutter. The same components will be explained as follows using the same reference numerals.

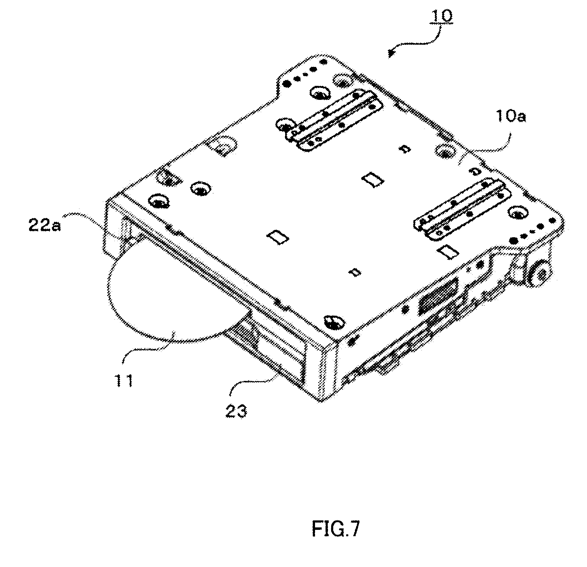

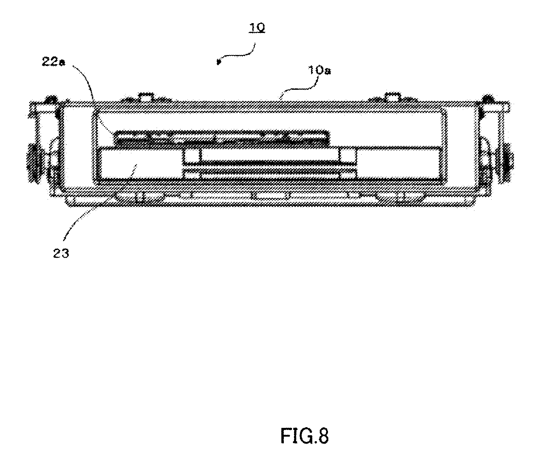

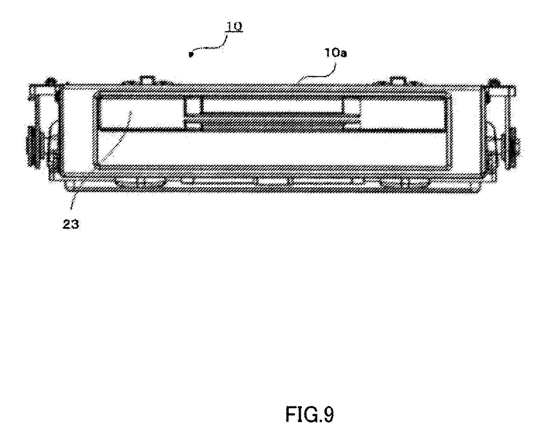

FIG.7 is a perspective view showing from above the media playback and display apparatus 10 according to the present embodiment. FIG.8 is a front view showing the media playback and display apparatus 10 with the shutter 23 open, in a direction toward the media inserting slot 22a. FIG.9 is a front view showing the media playback and display apparatus 10 with the shutter 23 closed, in a direction toward the media inserting slot 22a.

FIG.7 shows the state where the disc-shaped medium 11 is being brought into the media playback unit 20 of the media playback and display apparatus 10 with the shutter 23 open. That is, FIG.7 shows a state where part of the medium 11 is inserted in the media playback unit 20 from the media inserting slot 22a. Further, FIG.7 shows a surface 10a (i.e. a ceiling of the media playback and display apparatus 10) on the side of the media playback and display apparatus 10 that is attached to the ceiling 12 of the vehicle.

In this state, the shutter 23 is slid downward in case where the media playback and display apparatus 10 is attached to the ceiling 12 of the vehicle. When the shutter 23 is slid downward, the media inserting slot 22a provided in the media playback unit 20 is configured to be viewable from outside of the media playback and display apparatus 10, that is, the media inserting slot 22a is configured to appear in order to allow insertion of the medium 11 into the media playback unit 20.

The shutter 23 is slid upward and downward with respect to the media inserting slot 22a to close and open the media inserting slot 22a. As shown in FIG.8, when the shutter 23 is slid downward, the media inserting slot 22a is opened with respect to the passengers, and, as shown in FIG.9, when the shutter 23 is slid upward, the media inserting slot 22a hides behind the shutter 23 and is closed with respect to the passengers.

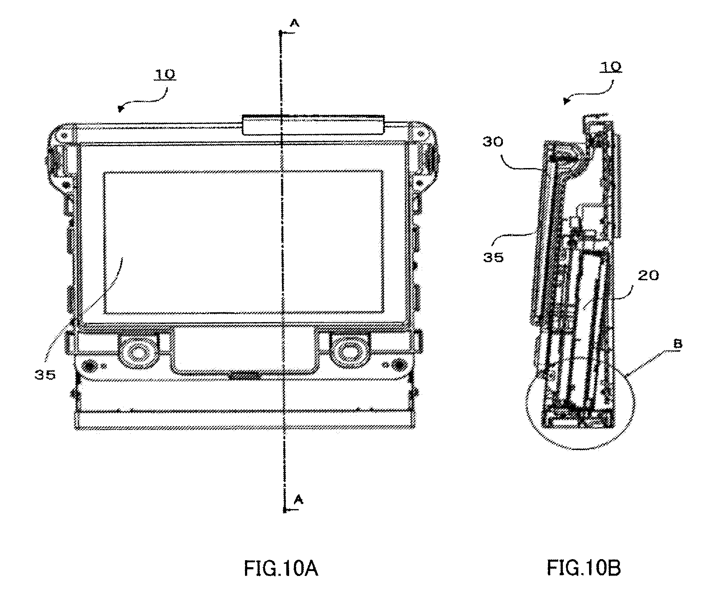

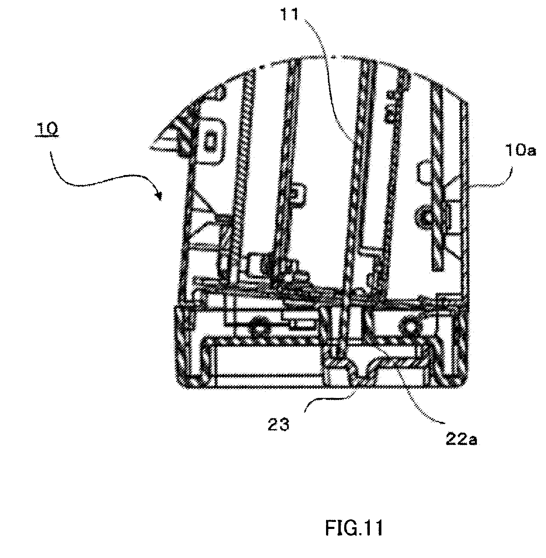

FIG.10 is a front view and a cross-sectional view in a state where the display unit 30 of the media playback and display apparatus 10 is accommodated in the display unit accommodator 40. FIG.10A is a view showing the screen 35, from the front in a state where the display unit 30 of the media playback and display apparatus 10 is accommodated in the display unit accommodator 40. FIG.10B is a cross-sectional view of part A-A in FIG.10A. FIG.11 is a partially enlarged view of area B in FIG.10.

When some impact works on the media playback and display apparatus 10, there is a possibility that the medium 11 moves toward the media inserting slot 22a side. As shown in FIG.10 and FIG.11, the media playback and display apparatus 10 according to the present embodiment employs a configuration that can close the shutter 23. Accordingly, even when the medium 11 moves toward the media inserting slot 22a side, if the shutter 11 closed, the media playback and display apparatus 10 makes the medium 11 abut on the shutter 23 and prevents the medium 11 from jumping out of the media playback and display apparatus 10.

Particularly, the operation of the shutter 23 of the operations of the media playback and display apparatus 10 according to the present embodiment configured as described above will be explained below.

First, assume that the shutter 23 is slid upward (i.e. the shutter 23 is closed) in a state where the medium 11 is not inserted into the media playback and display apparatus 10. In this state, when a button (i.e. a shutter open button not shown) is operated, the media playback and display apparatus 10 detects this button operation using the controlling means such as a microcomputer (not shown), and rotates the motor (not shown). As a result, the power of this motor transmits to the shutter through gear trains (not shown), so that the shutter 23 slides and moves downward to open.

By this means, the media inserting slot 22a appears and, consequently, the passenger can insert the medium 11 in this media inserting slot 22a. Note that, although a case has been explained here where the medium 11 is not inserted at first, the same applies to cases where the medium 11 is inserted at first and is changed with another medium 11.

Assume that the passenger inserts the medium 11 in the media inserting slot 22a in this state. Then, when the medium 11 enters into the media playback unit 20 to some extent as shown in FIG.7, the media playback and display apparatus 10 detects the insertion of the medium 11 by means of a detecting means provided inside the media playback unit 20, and rotates the roller provided near the media inserting slot 22a. By this means, the media playback and display apparatus 10 performs an operation of pulling the medium 11 inside the media playback unit 20 sandwiching the medium 11 by this roller and the housing of the media playback unit 20, and places the medium 11 in a playback position in the media playback unit 20.

When the medium 11 is placed in the playback position or when the medium 11 is brought in the depth side of the media playback unit 20 and reaches a position where the medium 11 does not contact the shutter 23 even if the shutter 23 moves upward and downward, the media playback and display apparatus 10 detects this by means of a media insertion completion detecting means (not shown). Further, when the media playback and display apparatus 10 detects that the medium I1 reaches the above-described position, the above-described controlling means rotates the motor in the opposite direction from the above-described direction. By this means, the power of this motor transmits to the shutter through gear trains (not shown), so that the shutter 23 slides and moves upward to close.

Further, when the media playback and display apparatus 10 detects that the shutter 23 was closed, the controlling means controls the media display unit 20 and starts the operation of playing back the medium 11, or executes an initial operation and transitions to a stand-by mode.

Then, when a passenger performs a playback operation using the remote controller or hardware keys, the media playback and display apparatus 10 displays video images by means of the display unit 30. As a result, the passengers in the vehicle can view display content from the screen 35 of the display device 32.

As explained above, with the media playback and display apparatus 10 according to the present embodiment, the shutter 23 is slid to cover the media inserting slot 22a in a state where the medium 11 is present inside the media playback unit 20. That is, the media playback and display apparatus 10 according to the present embodiment employs a configuration including the shutter 23 that covers the media inserting slot 22a.

According to this configuration, even when some impact works on the media playback and display apparatus 10, the media playback and display apparatus 10 can prevent the medium 11 inserted inside, from jumping out of the apparatus and further improve safety for the passengers in the vehicle.

Further, the media playback and display apparatus 10 according to the present embodiment employs a configuration in which the shutter 23 is provided to slide upward and downward with respect to the media inserting slot 22a.

According to this configuration, the media playback and display apparatus 10 can perform operations of opening and closing the shutter 23 with a simple structure.

Further, the media playback and display apparatus 10 according to the present embodiment has the media insertion completion detection means that detects that the medium 11 is completely inserted, and is configured to slide the shutter 23 according to the detection result in the media insertion completion detection means.

According to this configuration, the media playback and display apparatus 10 does not open and close the shutter 23 in a state where the medium 11 is not completely inserted, so that it is possible to prevent the medium 11 from being damaged by opening and closing the shutter 23.

Further, with the above-described present embodiment, although the shutter 23 is closed except when the medium 11 is inserted or ejected, this will help to prevent dust from entering into the media playback and display apparatus 10.

Further, with the above-described present embodiment, although the media playback and display apparatus 10 is configured to electronically control the operation of the shutter 23, the media playback and display apparatus 10 may employ a configuration, for example, providing a knob to the shutter 23. By this means, the passengers can manually open and close the shutter 23.

### (Embodiment 3)

The media playback and display apparatus according to Embodiment 3 of the present invention will be explained below with reference to the accompanying drawings.

The media playback and display apparatus according to the present embodiment differs from Embodiment 1 and Embodiment 2 in providing a protective cover that protects the screen of the display unit from scratches by covering the screen of the display unit.

The configuration of the media playback and display apparatus according to the present embodiment is the same as the media playback and display apparatus according to Embodiment 1 and Embodiment 2 except the protective cover. The same components will be explained below using the same reference numerals.

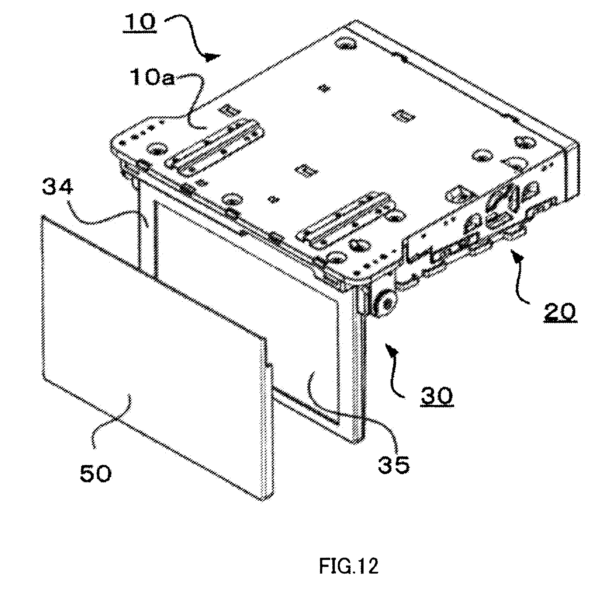

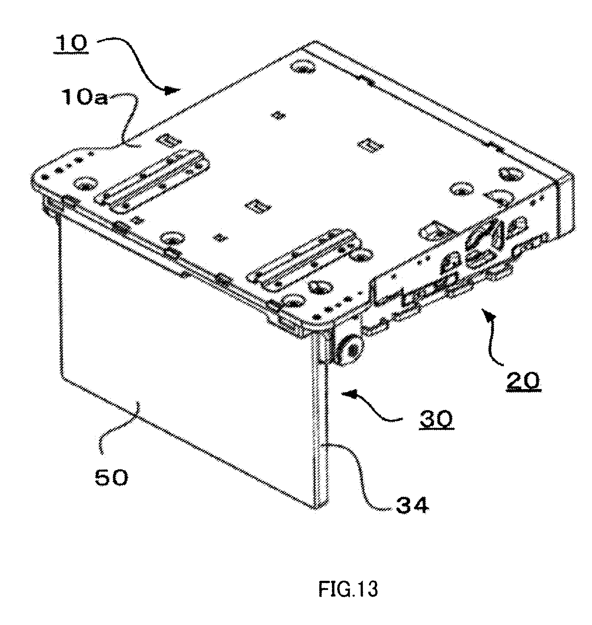

FIG.12 and FIG.13 are perspective views showing from above the media playback and display apparatus 10 according to the present embodiment. FIG.12 and FIG.13 show the media playback and display apparatus 10 in a state where the display unit 30 is rotated to move away from the display unit accommodator 40, that is, in a state where the media playback and display apparatus 10 is placed in the position to be used by passengers.

FIG.12 shows the media playback and display apparatus 10 in a state immediately before the protective cover 50 is attached to the display unit 30. Further, FIG.13 shows the media playback and display apparatus 10 in a state where the protective cover 50 is attached and is fixed to the display unit 30.

As described above, the media playback and display apparatus 10 according to the present embodiment has the protective cover 50 that is fixed covering the screen 35 of the display unit 30. Consequently, even if something hits the screen 35 due to some influences, for example, when a passenger hits the screen 35 of the display unit 30 carelessly, the object that contacts the screen 35 is prevented from directly contacting the screen 35, so that the screen 35 is not scratched.

With the present embodiment, the protective cover 50 is made of, for example, the following optically transparent materials.

That is, synthetic resin such as PC (polycarbonate), PMMA (methacryl resin), PET (polyethylene terephthalate), an alloy thereof, quartz glass or crystal may be used for the protective cover 50. Further, in this case, for example, surface treatment is applied to at least the outer surface of the protective cover 50, and the outer surface functions as a mirror surface.

Here, the protective cover 50 functioning as a mirror surface is the protective cover 50 having a reflection function to an extent that the protective cover 50 can be used as a mirror, and, as long as the reflection function is secured as a mirror, some coloring or display of texts or graphics does not matter. Further, it is arbitrary to make the mirror surface that is applied to the protective cover 50 a large mirror surface or a small mirror surface.

Furthermore, the part in which a specular reflection layer for specular reflection is formed is not limited to the outer surface of the protective cover 50, and may be provided on both surfaces.

In the media playback and display apparatus 10 configured as described above, the protective cover 50 that covers the screen 35 of the display unit 30 functions as a mirror surface. Therefore, the screen 35 of the display unit 30 has difficulty in being recognized by passengers due to reflection of light when the media playback and display apparatus 10 is powered off and the display unit 30 does not show static images or moving images and is accommodated in the display unit accommodator 40.

By contrast with this, when the media playback and display apparatus 10 is powered on for use, the media playback and display apparatus 10 can display static images or moving images of image information such as text information, photographs and graphics displayed on the display unit 30 in order to allow the passengers view these images through the protective cover 50.

Accordingly, for example, people who look inside the car from outside and see the media playback and display apparatus 10, have difficulty in recognizing that the display unit 30 is mounted. That is, it is possible to provide an advantage of preventing the media playback and display apparatus 10 from being stolen.

Further, the protective cover 50 according to the present embodiment may be formed with a smoke sheet.

Note that the smoke sheet refers to resin material in which the transmittance for colors of low color values is about 20 percent. Accordingly, in this case, light that transmits from the back surface of the protective cover 50 is dimmed to about 20 percent of the transmittance.

When a smoke sheet is applied to the protective cover 50 according to the present embodiment, video images displayed by the display unit 30 are incident on the back surface of the protective cover 50 as original direct light for passengers.

Therefore, video images incident on the back surface of the protective cover 50 in this way are dimmed by the protective cover 50, and are emitted from the surface of the protective cover 50.

As described above, even if a smoke sheet is used as the protective cover 50, the protective cover 50 functions in the same way as in the case where mirror surface treatment is applied to a transparent resin material. That is, for example, people who look inside the car from outside and see the media playback and display apparatus 10, have difficulty in recognizing that the display unit 30 is mounted. That is, it is possible to provide an advantage of preventing the media playback and display apparatus 10 from being stolen.

Further, the protective cover 50 may be configured to cover the overall display unit 30 in a state where not only the screen 35 of the display unit 30, but also the display unit 30 are accommodated in the display unit accommodator 40. Furthermore, the protective cover 50 may be configured to cover the overall surface having the media inserting slot 22a, in a state where the display unit 30 is accommodated in the display unit accommodator 40. By this means, when the media playback and display apparatus 10 is not used, it is difficult to recognize that the media playback and display apparatus 10 is attached, so that it is possible to further enhance the advantage of preventing the media playback and display apparatus 10 from being stolen.

The method of fixing the protective cover 50 to the display unit 30 is not particularly limited, and, generally speaking, only need to adopt methods of pasting, sandwiching and so on. However, it is necessary to fix the protective cover 50 to the display unit 30 in a reliable manner, secure visibility for projection of images and so on, and maintain quality of a reflective surface as a mirror or quality of a smoke sheet.

Further, for example, in case where the protective cover 50 is pasted using an adhesive material, there are cases where the presence of the protective cover 50 has negative influences on visibility w hen the thickness of an adhesive material layer varies and when shadows are produced due to mixing of different materials. Therefore, it is preferable to attach or sandwich the protective cover 50 only in a spot in a part that is not seen from outside (a part that has little negative influences on visibility) such as a part outside the frame of the screen 35 of the case 34 instead of the overall screen 35 of the display unit 30.

The disclosures of Japanese Patent Application No.2008-322161, filed on December 18, 2008, and Japanese Patent Application No.2009-181418, filed on August 4, 2009, including the specifications, drawings and abstracts, are incorporated herein by reference in their entirety.

### Industrial Applicability

As described above, with the media playback and display apparatus according to the present invention, the media inserting slot is arranged to be oriented toward the front seats in the vehicle and the screen of the display unit is arranged to be oriented toward the rear seats. By this means, the media playback and display apparatus according to the present invention allows passengers in the front seats to easily change media, and thereby provides an advantage of improved operability. Consequently, the media playback and display apparatus according to the present invention is an apparatus that integrates a media playback unit and a display unit for playing back and displaying speech or video information recorded in the medium, and is useful as a media playback and display apparatus that is mounted in a vehicle.

### Reference Signs List

- 10: MEDIA PLAYBACK AND DISPLAY APPARATUS
- 11: MEDIUM
- 12: CEILING
- 20: MEDIA PLAYBACK UNIT
- 22: MEDIA PLAYBACK DEVICE
- 22a: MEDIA INSERTING SLOT
- 30: DISPLAY UNIT
- 31: SUPPORT AXIS
- 34: CASE
- 35: SCREEN
- 40: DISPLAY UNIT ACCOMMODATOR
- 50: PROTECTIVE COVER

## Claims

1. A media playback and display apparatus that comprises:
a media playback unit that is mounted in a vehicle and that plays back information recorded in a medium; and
a display unit that displays video information played back in the media playback unit, wherein:
a media inserting slot that allows insertion of the medium into the media playback unit is provided to be oriented toward a front seat in the vehicle; and
a screen of the display unit is arranged to be viewable from a rear seat of the vehicle.

2. The media playback and display apparatus according to claim 1, wherein:
the media inserting slot is provided at one end of the media playback and display apparatus; and
the display unit is provided rotatably by being pivotally supported by a rotating shaft provided at the other end of the media playback and display apparatus.

3. The media playback and display apparatus according to claim 2, further comprising a display unit accommodator that accommodates the display unit,
wherein the display unit rotates between a viewing position where the screen can be viewed from the rear seat of the vehicle and an accommodating position where the display unit is accommodated in the display unit accommodator.

4. The media playback and display apparatus according to claim 3, wherein the display unit accommodator accommodates the display unit such that the screen of the display unit becomes parallel to a ceiling surface of the vehicle.

5. The media playback and display apparatus according to claim 1, further comprising a shutter that covers the media inserting slot.

6. The media playback and display apparatus according to claim 5, wherein the shutter is provided slidably upward and downward with respect to the media inserting slot.

7. The media playback and display apparatus according to claim 6, further comprising a media insertion completion detecting section that detects that the medium is completely inserted,
wherein the shutter performs a sliding operation according to a detection result in the media insertion completion detecting section.

8. The media playback and display apparatus according to claim 1, further comprising a protective cover that covers the screen of the display unit.

9. The media playback and display apparatus according to claim 8, wherein mirror surface treatment is applied to a surface of the protective cover.

10. The media playback and display apparatus according to claim 8, wherein the protective cover is formed with a smoke sheet.

## Amended claims

### Amended claims under Art. 19.1 PCT

**1.** (Amended)
A media playback display apparatus that comprises:
a media playback unit that is mounted in a vehicle and that plays back information recorded in a medium; and
a display unit that displays video information played back in the media playback unit, wherein:
a media inserting slot that allows insertion of the medium into the media playback unit is provided to be oriented toward a front seat in the vehicle;
a screen of the display unit is arranged to be viewable from a rear seat of the vehicle;
the media inserting slot is provided at one end part of the media playback display apparatus; and
the display unit is provided rotatably by being pivotally supported by a rotating shaft provided at the other end part of the media playback display apparatus.

**2.** (Amended)
The media playback display apparatus according to claim 1, further comprising a display unit accommodating part that accommodates the display unit,
wherein the display unit rotates between a viewing position where the screen can be viewed from the rear seat of the vehicle and an accommodating position where the display unit is accommodated in the display unit accommodating part.

**3.** (Amended)
The media playback display apparatus according to claim 2, wherein the display unit accommodating part accommodates the display unit such that the screen of the display unit becomes parallel to a ceiling surface of the vehicle.

**4.** (Amended)
The media playback display apparatus according to claim 1, further comprising a shutter that covers the media inserting slot.

**5.** (Amended)
The media playback display apparatus according to claim 4, wherein the shutter is provided slidably upward and downward with respect to the media inserting slot.

**6.** (Amended)
The media playback display apparatus according to claim 5, further comprising a media insertion completion detecting section that detects that the medium is completely inserted,
wherein the shutter performs a sliding operation according to a detection result in the media insertion completion detecting section.

**7.** (Amended)
The media playback display apparatus according to claim 1, further comprising a protective cover that covers the screen of the display unit.

**8.** (Amended)
The media playback display apparatus according to claim 7, wherein mirror surface treatment is applied to a surface of the protective cover.

**9.** (Amended)
The media playback display apparatus according to claim 7, wherein the protective cover is formed with a smoke sheet.

**10.** (Deleted)
